**Europäisches Patentamt**

**European Patent Office**

**Office européen des brevets**

(11) Veröffentlichungsnummer: **0 196 439**
A1

## (12) EUROPÄISCHE PATENTANMELDUNG

(21) Anmeldenummer: **86102134.3**

(22) Anmeldetag: **19.02.86**

(51) Int. Cl.⁴: **C 09 D 11/00**
C 09 D 13/00, C 08 K 5/00

(30) Priorität: **02.03.85 DE 3507469**

(43) Veröffentlichungstag der Anmeldung:
**08.10.86 Patentblatt 86/41**

(84) Benannte Vertragsstaaten:
**AT BE CH DE FR GB IT LI NL SE**

(71) Anmelder: **J.S. Staedtler**
**Kirchenweg 10**
**D-8500 Nürnberg(DE)**

(72) Erfinder: **Schnorrer, Heinrich**
**Lohbachstrasse 16a**
**D-8460 Schwandorf(DE)**

(54) Aromastoffe enthaltendes Mittel zum Schreiben, Zeichnen, Malen, Markieren, Radieren oder Modellieren.

(57) Ein Aromastoffe enthaltendes Mittel zum Schreiben, Zeichnen, Malen, Markieren, Radieren oder Modellieren, enthält mindestens einen Bitterstoff, vorzugsweise Chinin, Chininderivate und/oder Naringin.

EP 0 196 439 A1

Croydon Printing Company Ltd.

J. S. STAEDTLER

Kirchenweg 10

8500 Nürnberg

Nürnberg, den

Pat-P 132 EP   Hr/Pa

## Aromastoffe enthaltendes Mittel zum Schreiben, Zeichnen, Malen, Markieren, Radieren oder Modellieren

Die Erfindung betrifft Aromastoffe enthaltende Mittel zum Schreiben, Zeichnen, Malen, Markieren, Radieren oder Modellieren.

Derartige Mittel sind vielfach allgemein bekannt, wobei in jüngerer Zeit diesen insbesondere wohlriechende und wohlschmeckende Aromastoffe zugesetzt worden sind.

Als besonderer Nachteil dieser bekannten Mittel hat es sich gezeigt, daß insbesondere bei deren Verwendung durch Kinder, die entsprechenden Schreib-, Zeichen-, Mal-, Markierungs-, Radier- und Modelliergeräte oder -artikel bevorzugt in den Mund genommen werden, so daß diese Mittel leicht in den Körper gelangen können. Hierdurch kann es in extremen Fällen zu gesundheitlichen Beeinträchtigungen kommen.

Aufgabe der vorliegenden Erfindung ist es daher, Schreib-, Zeichen-, Mal-, Markierungs-, Radier- oder Modelliermittel zu schaffen, die aufgrund ihres besonderen aromatischen Charakters diesbezüglich vorbeugen und dem "in den Mund nehmen" oder "Verspeisen" entgegenzuwirken.

Diese Aufgabe wird durch den Zusatz geeigneter Bitterstoffe auf besonders einfache Weise gelöst.

Bevorzugte Ausführungsformen und Modifikationen des erfindungsgemäßen Vorschlages sind in den Unteransprüchen dargestellt.

Wird als Bitterstoff eine oder mehrere ungiftige Substanzen verwendet, so wird hierdurch der Anteil eventuell bedenklicher Bestandteile des jeweiligen Mittels nicht zusätzlich erhöht.

. . .

Als Bitterstoff kann das von bestimmten Erfrischungsgetränken her bekannte Chinin oder ein Chinin-Derivat,
insbesondere Chininsulfat, Anwendung finden.

Zusätzlich oder als ausschließlicher Bitterstoff eignet
sich bevorzugt auch Naringin, ein vorzugsweise aus Grapefruit (beispielsweise nach US-PS 2 630 432, nach ES-PS
Nr. 481 426 oder nach ES-PS 481 427) gewonnener Extrakt.
Bei den verwendeten Bitterstoffen soll es sich um solche
handeln, die grundsätzlich oder zumindest aber in der jeweils für das entsprechende Mittel geeigneten Konzentration bzw. Menge, ungiftig sind.

Die vorgeschlagenen Bitterstoffe, wie Chinin oder dessen
Derivate, entsprechen in den zur Erzielung eines bitteren
Geschmackes erforderlichen Mengen dieser Forderung,
während Naringin vollkommen ungiftig ist und daher i. d. R.
auch als für Lebensmittel geeignet gilt.

Die nach dem deutschen Lebensmittelgesetz gültige Menge
für Chinin bzw. für kennzeichnungspflichtige Mittel liegt
bei 80 bis 85 mg/l und sollte bei flüssigen Schreib-,
Zeichen-, Mal- oder Markierungsmitteln möglichst nicht
überschritten werden.

Wird das erfindungsgemäße Mittel in derartiger Konzentration mit Bitterstoff versehen, daß es beim Berühren mit
dem Mund insgesamt unangenehm schmeckt, dann werden insbesondere Kinder i. d. R. davon abgehalten werden, die
mit diesen Mitteln gefüllten Schreib-, Zeichen-, Mal-
oder Markiergeräte, die aus den Mitteln gefertigten Gegenstände - z. B. Radierer - oder Massen, wie Modelliermassen aller Art (oder auch mit den Mitteln verschmutzte
Finger u. a.) in den Mund zu nehmen oder gar zu verspeisen.

Erfindungsgemäß lassen sich flüssige oder pastöse Schreib-,
Zeichen-, Markierungs- oder Maltinten oder -farben, wie
z. B. besonders auch Fingermalfarben, feste oder wachsartige Schreib-, Zeichen- oder Malstifte oder -kreiden,

...

**0196439**

ebenso ausgestalten, wie feste Radiergummis oder flüssige Korrekturmittel, wie sie z. B. als sogenannter "Tinten-Tod" bekannt sind, ober wie pulverförmige, pastöse oder wachsartige Modellier- oder Formmassen.

Die mengenmäßige Abstimmung sollte jeweils derart erfolgen, daß einerseits bei der Berührung mit dem Mund ein unangenehm bitterer Geschmack feststellbar ist, daß aber andererseits kein intensiver bzw. nur geringer unangenehmer (oder auch angenehmer) Geruch entsteht.

Anhand einiger Ausführungsbeispiele wird die Erfindung nachfolgend näher dargestellt.

Beispiel 1          (Fingermalfarbe)

| | |
|---|---|
| Wasser | 44,0 Gew.-T. |
| Carboxymethylcellulose (Verdickungsmittel) | 3,0 " |
| Alkylpolyglycolether (Netzmittel) | 2,0 " |
| Kreide (Füllstoff) | 48,0 " |
| Pigment | 2,7 " |
| Konservierungsmittel | 0,2 " |
| Naringin | 0,1 " |

Beispiel 2          (Schreibtinte)

| | |
|---|---|
| Wasser | 70,0 Gew.-Teile |
| Diethylenglycol | 15,0 " |
| Glyzerin | 9,0 " |
| Netzmittel | 0,3 " |
| Farbstoff | 5,7 " |
| Chininsulfat | 0,005 " |

...

Beispiel 3          (Wachsmalkreide)

a) wasserfest                    b) wasservermalbar

| Wachs | 60,0 GewTeile | Wachs | 35,0 G.-T. |
|---|---|---|---|
| Kaolin | 35,0 " | Emulgator | 25,0 " |
| Pigment | 5,0 " | Kreide(Füllst.) | 37,0 " |
| Chinin | 0,1 " | Pigment | 3,0 " |
| | | Naringin | 0,2 " |

Beispiel 4          (Buntstift-Mine)

| | |
|---|---|
| Carboxymethylcellulose (Bindemittel) | 5,0 Gew.-Teile |
| Calciumstearat (Gleitmittel) | 10,0 " |
| Kaolin (Füllstoff) | 80,0 " |
| Pigment | 5,0 " |
| Naringin | 0,1 " |
| Chinin | 0,1 " |

Beispiel 5          (Farbtabletten)

| | |
|---|---|
| Dextrin (Bindemittel ) | 40,0 Gew.-Teile |
| Kreide (Füllstoff) | 35,0 " |
| Natriumoleat (Netzmittel) | 5,0 " |
| Pigment | 15,0 " |
| Naringin | 0,15 " |

Beispiel 6          (Radierer)

| | |
|---|---|
| PVC | 25,0 Gew.-Teile |
| D O P  * (Weichmacher) | 37,0 " |
| Kreide | 38,0 " |
| Chininsulfat | 0,05 " |

_____

*   Dioctylphthalat

. . .

Beispiel 7        (Modelliermassen)

a) Modelliermasse auf wässriger Basis, lufttrocknend

Methylhydroxypropylcellulose (Bindem.)  1,0 Gew.-T.
Kaolin (Füllstoff)                      60,0 "
Wasser                                  30,0 "
Cellulose                                8,7 "
Konservierungsmittel                     0,2 "
Naringin                                 0,1 "

b) Modelliermasse, ofenhärtend

PVC                       52,0 Gew.-Teile
D O P                     23,0 "
Calciumstearat             4,0 "
Kaolin                    21,0 "
Pigment                    0,1 "
Chinin                     0,1 "

Beispiel 8        (Modellierpulver)

Carboxymethylcellulose     8,0 Gew.-Teile
Kaolin                    71,5 "
Holzmehl                  20,0 "
Konservierungsmittel       0,4 "
Naringin                   0,1 "

Die in den Beispielen genannten Bitterstoffe Naringin, Chinin oder Chinin-Sulfat sind im Bedarfsfalle auch untereinander austauschbar oder können miteinander kombiniert werden.

Die Grundmassen erfindungsgemäßer Mittel können sich in jeder beliebigen Weise, insbesondere nach jeder bekannten Art, zusammensetzen, sofern die jeweiligen Bestandteile mit den zu verwendenden Bitterstoffen verträglich sind bzw. sofern die für das verwendete

**0196439**

Bittermittel geeigneten Lösungsmittel auch in dem entsprechenden Schreib-, Zeichen-, Mal-, Markierungs-, Radier- oder Modelliermittel Anwendung finden können.

Bei den im wesentlichen festen Minen, Kreiden, Radierern oder Modelliermassen werden die Bitterstoffe üblicherweise erst bei der Berührung mit Speichel, d. h. beim "in den Mund nehmen", gelöst, so daß sie dann erst ihr i. d. R. als unangenehm empfundenes Aroma entwickeln.

0196439

## Patentansprüche

1. Aromastoffe enthaltendes Mittel zum Schreiben, Zeichnen, Malen, Markieren, Radieren oder Modellieren,
   dadurch gekennzeichnet,
   daß das Mittel mindestens einen Bitterstoff enthält.

2. Mittel nach Anspruch 1,
   dadurch gekennzeichnet,
   daß es einen oder mehrere, in geeigneter Konzentration und Menge ungiftige(n), Bitterstoff(e) enthält.

3. Mittel nach Anspruch 1 oder 2,
   dadurch gekennzeichnet,
   daß es Naringin als Bitterstoff enthält.

4. Mittel nach Anspruch 1 oder 2,
   dadurch gekennzeichnet,
   daß es Chinin oder ein Chininderivat als Bitterstoff enthält.

5. Mittel nach Anspruch 4,
   dadurch gekennzeichnet,
   daß es Chininsulfat als Bitterstoff enthält.

6. Mittel nach Anspruch 4 oder 5,
   dadurch gekennzeichnet,
   daß es einen Chininanteil aufweist, der unter der nach deutschem Lebensmittelrecht kennzeichnungspflichtigen Menge liegt.

...

- 8 -

0196439

7. Mittel nach einem der vorhergehenden Ansprüche,
d a d u r c h   g e k e n n z e i c h n e t ,
daß es den Bitterstoff in einer geschmacklich
als i. d. R. unangenehm empfindbaren Konzentration enthält.

8. Mittel nach einem der vorhergehenden Ansprüche,
d a d u r c h   g e k e n n z e i c h n e t ,
daß es als Schreib-, Zeichen-, Markierungs- oder
Maltinte oder -farbe in flüssiger oder pastöser
Form vorliegt.

9. Mittel nach Anspruch 8,
d a d u r c h   g e k e n n z e i c h n e t ,
daß es als Fingermalfarbe vorliegt.

10. Mittel nach einem der vorhergehenden Ansprüche
1 bis 7,
d a d u r c h   g e k e n n z e i c h n e t ,
daß es als Schreib-, Zeichen- oder Malstift oder
-kreide in fester oder wachsartiger Konsistenz
vorliegt.

11. Mittel nach einem der vorhergehenden Ansprüche
1 bis 7,
d a d u r c h   g e k e n n z e i c h n e t ,
daß es als Radierer oder als Korrekturmittel
in fester oder in flüssiger Form vorliegt.

12. Mittel nach einem der vorhergehenden Ansprüche
1 bis 7,
d a d u r c h   g e k e n n z e i c h n e t ,
daß es als Modellier- oder Formmasse in pastöser
oder wachsartiger Form vorliegt.

. . .

0196439

13. Mittel nach einem der vorhergehenden Ansprüche 1 bis 7,

dadurch gekennzeichnet,

daß es als pulverförmige Modellier- oder Form- masse vorliegt.

. . .

0196439

Nummer der Anmeldung

EP   86 10 2134

**Europäisches
Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 055 226  (FABBRICA ITALIANA LAPIS ED AFFINI (F.I.L.A.) S.p.A.) | | C 09 D   11/00<br>C 09 D   13/00<br>C 08 K    5/00 |
| | ----- | | |

|  |
|---|
| RECHERCHIERTE SACHGEBIETE (Int. Cl.4) |
| C 09 D<br>C 08 K |

Der vorliegende Recherchenbericht wurde für alle Patentansprüche erstellt

| Recherchenort<br>DEN HAAG | Abschlußdatum der Recherche<br>24-06-1986 | Prüfer<br>GIRARD Y.A. |
|---|---|---|

KATEGORIE DER GENANNTEN DOKUMENTE
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82